# EUROPÄISCHE PATENTSCHRIFT

(11) **EP 1 845 390 B1**
(45) Veröffentlichungstag und Bekanntmachung des Hinweises auf die Patenterteilung: **01.07.2009**
(21) Anmeldenummer: 07105287.2
(22) Anmeldetag: 30.03.2007
(51) Int. Cl.: G01S 7/03, G01S 13/60, B08B 7/02

(54) **Dopplerradareinrichtung**
Doppler radar device
Dispositif à double radar

(30) Priorität: 10.04.2006 DE 102006017219
(43) Veröffentlichungstag der Anmeldung: 17.10.2007
(73) Patentinhaber: SIEMENS AKTIENGESELLSCHAFT, 80333 München (DE)
(72) Erfinder: Kakuschke, Chris, Dr., 12435 Berlin (DE)

(56) Entgegenhaltungen:
- DE-A1- 4 217 559
- DE-A1- 19 826 168
- DE-C1- 19 735 161
- GB-A- 2 052 204
- JP-A- 8 029 535
- US-A- 5 172 024
- US-A1- 2006 152 705

## Beschreibung

Die Erfindung betrifft eine Dopplerradareinrichtung mit einem Mikrokontrollersystem und mindestens einem Strahlungsfenster, insbesondere Mikrowellenfenster, zur Ermittlung einer Geschwindigkeit und/oder eines Weges eines Schienenfahrzeugs über Grund.

Moderne Zugbeeinflussungssysteme, insbesondere ETCS - European Train Control System - benötigen eine genaue und hochverfügbare Ermittlung des Weges und/oder der Geschwindigkeit der Züge. Zusätzlich oder alternativ zu traditionellen Geschwindigkeitsmessverfahren, die überwiegend auf Radimpulsgeber basieren, werden dazu Dopplerradareinrichtungen eingesetzt, wie beispielsweise in der DE 197 35 161 und der GB 2 052 203 beschrieben. Durch diffuse Reflektion eines von dem Strahlungsfenster abgestrahlten Signals am Untergrund gelangt ein geringer Anteil wieder an das Strahlungsfenster. Dort entsteht durch Frequenzmischung von Sende- und Empfangssignal bei einer Bewegung der Dopplerradareinrichtung relativ zum Untergrund aufgrund des Dopplereffektes ein niederfrequenter Signalanteil, das Doppelsignal, dessen mittlere Frequenz der Geschwindigkeit des Zuges direkt proportional ist.

Bei allen gattungsgemäßen Dopplerradareinrichtungen tritt das Problem auf, dass die nach unten geneigten Strahlungsfenster Umweltbelastungen, insbesondere Witterungseinflüssen, ausgesetzt sind, welche durch Dämpfung oder Ablenkung der Radarstrahlen zu Messfehlern oder zum Ausfall der Dopplerradareinrichtung führen können. Besonders prekär tritt dieser Effekt bei verschneiten oder vereisten Strahlungsfenstern auf.

Um diesem Effekt entgegen zu wirken, wird das Strahlungsfenster bisher über Beheizung oder mit Druckluft freigehalten. Diese bekannten Lösungsansätze sind jedoch sehr kostenintensiv, energieaufwendig, wartungsaufwendig, ausfallgefährdet und erfordern zum Teil erhebliche zusätzliche Veränderungen an den Fahrzeugen. Darüber hinaus kann der Erfolg der ergriffenen Maßnahmen nicht verifiziert werden. Massive Überdimensionierungen sind deshalb notwendig.

Aus der JP 08029545, der DE 42 17 559 und der US 5 172 024 sind Reinigungsverfahren von exponierten Flächen eines Radarsystems auf der Basis eines Piezoelementes bekannt. Dabei wirkt das Piezoelement als Aktuator, welcher die zu reinigende Fläche zu Schwingungen anregt.

Schwingungserreger zur Reinigung von Glasfenstern sind aus der DE 198 26 168 bekannt.

Der Erfindung liegt die Aufgabe zugrunde, eine Dopplerradareinrichtung der gattungsgemäßen Art anzugeben, bei der der Einfluss von Umweltbedingungen, insbesondere Witterungsbedingungen, auf die Funktionsfähigkeit der Dopplerradareinrichtung reduziert ist. Darüber hinaus soll eine Störung der Dopplerradareinrichtung durch Umwelteinflüsse, Material- oder Montagefehler im laufenden Betrieb zeitnah zu ihrem Auftreten erkannt werden.

Erfindungsgemäß wird die Aufgabe durch die Merkmale des kennzeichnenden Teils des Anspruchs 1 gelöst. Piezobauteile, meist Piezokeramikscheiben oder Stapel derselben, sind in vielfältiger Ausführung verfügbar und sind in der Lage, elektrische Spannung zwischen den gegeneinander isolierten Elektroden in mechanische Bewegung oder Schwingung umzuwandeln und umgekehrt. Durch Anlegen einer Wechselspannung werden das Piezobauteil und das mit ihm verbundene Strahlungsfenster in Schwingungen versetzt. Besonders ausgeprägt sind diese im Fall der systemspezifischen mechanischen Resonanzschwingungen. So wird die Anlagerung von Partikeln, insbesondere Schmutz-, Schnee- und Eispartikeln, erschwert oder nach dem Einschalten rückgängig gemacht. Auf diese Weise ergibt sich auch bei widrigen Witterungsverhältnissen eine erhöhte Verfügbarkeit der Dopplerradareinrichtung. Die Funktion kann über den gesamten Bereich der Temperatur und Luftfeuchtigkeit sowie über die volle Einsatzzeitspanne ermöglicht werden. Mechanisch bewegliche Teile im Sinne einer Reibungsverschleiß unterworfenen klassischen Konstruktion sind nicht erforderlich. Alterungserscheinungen treten kaum auf. Es ist lediglich dafür zu sorgen, dass die Größe des Piezobauteils derart bemessen ist, dass die durch das Strahlungsfenster austretende Mikrowellenstrahlung nicht durch das Piezobauteil beeinflusst wird. Vorteilhaft ist weiterhin, dass bereits mit Elektroden beschichtete Piezokeramikscheiben oder Piezokeramikscheibenstapel elektronische Standardbauteile darstellen, welche preisgünstig und in hoher Qualität von verschiedenen Quellen bezogen werden können. Durch die verbreitete Verwendung in Akustikapplikationen, insbesondere Hochtonlautsprechern oder akustischen Signalgebern, ist auch die Ansteuer- und Montagetechnologie als ausgereift und somit für den Einsatz in sicherheitsrelevanten Applikationen als geeignet anzusehen.

Die mechanische Resonanzschwingung des Piezobauteils verändert sich hinsichtlich der Frequenz und der Amplitude bei zunehmender Vereisung, so dass das Auffinden der mechanischen Resonanz zur Feststellung einer eventuellen Vereisung genutzt werden kann. Andererseits kann die Körperschallmessung des nun als Sensor betriebenen Piezobauteils zur Erkennung von Fahrzeugvibrationen und dadurch ausgelöster Fehlmessungen der Dopplerradareinrichtung dienen.

Um wirkungsvoll und zuverlässig das Strahlungsfenster zu mechanischen Schwingungen anzuregen, ist gemäß Anspruch 2 eine wasserfeste Verbindung zwischen den Rändern des Strahlungsfensters und dem Piezobauteil vorgesehen. Das Piezobauteil kann beispielsweise angeklebt und/oder unter Nutzung eventuell bereits vorhandener Bohrungen angeschraubt oder genietet werden.

Gemäß Anspruch 3 kann die Schwingungsenergie aber auch über ein kompressibles oder elastisches Medium indirekt von dem Piezobauteil auf das Strahlungsfenster übertragen werden.

Zur Minimierung der Energieaufnahme und Maximierung der Lebensdauer kann entsprechend Anspruch 12 die Aktivierungshäufigkeit des Piezobauteils als Schwingungsgenerator vom detektierten Verschmutzungs- und Vereisungsgrad abhängig gemacht werden.

Gemäß Anspruch 4 erfolgt die elektrische Ansteuerung des als Aktuator betriebenen Piezobauteils mittels Wechselspannungsbeaufschlagung durch eine Leistungsstufe. Eine einfache und effiziente FET-Brückenschaltung an einer Versorgungsspannung mit rechteckförmigem Verlauf der generierten symmetrischen Spannung genügt bereits.

Gemäß Anspruch 5 sind zwischen der Leistungsstufe und dem Piezoaktuator ein Messwiderstand und ein NF-Übertrager, d. h. Transformator, zwischengeschaltet. Der NF-Übertrager kann erforderlich sein, um die vergleichsweise hohe Ansteuerspannung, beispielsweise 200 V, des Piezoaktuators zu erreichen. Der Messwiderstand ermöglicht die Erkennung eines Stromaufnahmemaximums als Spannungsabfall am Ausgang der Leistungsstufe. Dieses Stromaufnahmemaximum ist zur Feststellung der mechanischen Resonanz des Piezoaktuators hilfreich. Andererseits kann der Messwiderstand auch über die Sekundärwicklung des NF-Übertragers mit einem Widerstandsnetzwerk direkt die Piezospannung bzw. Stromaufnahme messen.

Die Ansteuerung und Auswertung des Piezoaktuators erfolgt gemäß Anspruch 6 mittels des Mikrokontrollers oder Signalprozessors. Die Einheit von Prozessor und integriertem oder separatem Analog/Digitalwandler zur Digitalisierung der Messsignale wird im Folgenden als Mikrokontrollersystem bezeichnet. Die Doppelnutzung des in der Dopplerradareinrichtung ohnehin vorhandenen Mikrokontrollersystems ist problemlos möglich, da nur eine geringe zusätzliche Ressourcenbelastung zu erwarten ist. Alternativ kann auch eine externe Ansteuerung und/oder Auswertung vorgesehen sein.

Auch die Auswertung der Körperschallschwingung des als Sensor betriebenen Piezobauteils kann gemäß Anspruch 7 mittels des Mikrokontrollersystems erfolgen. Die Mikrophonieauswertung des Körperschalls zur Feststellung von Fahrzeugvibrationen kann aber auch durch parallele Ausgabe unabhängig von der Dopplerradareinrichtung in einem übergeordneten System, beispielsweise Fahrzeugrechner, erfolgen.

Passive Körperschallmessung erfordert die Erkennung kleiner Signaländerungen mit dem als Sensor betriebenen Piezobauteil. Die Sensorschaltung geht dafür in einen hochohmigen Zustand über, welcher beispielsweise bei einer Brückenschaltung problemlos durch Ansteuerung realisierbar ist. Der Messeingang des Mikrokontrollersystems wird dafür mittels einer Spannungsbegrenzungsschaltung geschützt.

Die Erfindung ist in den Unteransprüchen näher gekennzeichnet und wird nachfolgend anhand eines figürlich dargestellten Ausführungsbeispiels erläutert.

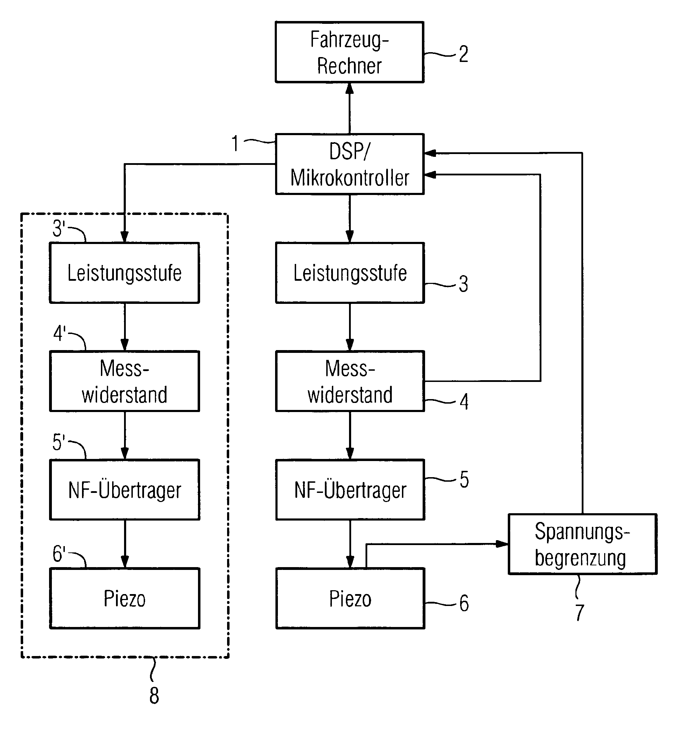

Die einzige Figur zeigt eine Prinzipdarstellung der wesentlichen Baugruppen einer erfindungsgemäßen Dopplerradareinrichtung.

Ein Mikrokontrollersystem 1 einer Dopplerradareinrichtung ist einerseits mit einem Fahrzeugrechner 2 und andererseits über eine Leistungsstufe 3, einen Messwiderstand 4 und einen NF-Übertrager 5 mit einem Piezobauteil 6 verbunden, welches so in mechanischem Kontakt zu einem nicht dargestellten Strahlungsfenster der Dopplerradareinrichtung gebracht ist, dass das Material des Strahlungsfensters zu mechanischen Schwingungen anregbar ist. Das Mikrokontrollersystem 1 dient primär der Auswertung der Radarstrahlung. Bei dem dargestellten Ausführungsbeispiel wird das Mikrokontrollersystem 1 zusätzlich für die Ansteuerung der Leistungsstufe 3 verwendet. Die Leistungsstufe 3 erzeugt eine Wechselspannung, die Elektroden am Piezobauteil 6 zugeführt ist. Mittels des Messwiderstandes 4 wird die Wechselspannung über das Mikrokontrollersystem 1 und die Leistungsstufe 3 derart eingeregelt, dass das Piezobauteil 6 in seiner spezifischen Resonanzfrequenz schwingt. Durch diese mechanischen Schwingungen wird die Anhaftung radarstrahldämpfender und ablenkender Partikel, insbesondere Schutz, Schnee und Eis, an das Piezobauteil 6 und damit an das Strahlungsfenster weitgehend verhindert. Falls dennoch beispielsweise zunehmende Vereisung auftritt, verändert sich die Resonanzfrequenz, was durch den Messwiderstand 4 feststellbar ist, so dass der Grad der Verstimmung des Resonanzkreises auch ein Maß für den Vereisungsgrad darstellt.

Das Piezobauteil 6 kann aber nicht nur elektrische Energie in mechanische Schwingungen umwandeln, sondern auch mechanische Schwingungen in elektrische Energie. In dieser Betriebsart, bei der das Piezobauteil 6 nicht bestromt ist, fungiert dieses als Sensor zur Ermittlung von Körperschall, beispielsweise Vibrationen durch die Bewegung des Fahrzeugs. Über eine Schaltung zur Spannungsbegrenzung 7 wird das Körperschallsignal dem Mikrokontrollersystem 1 zugeführt und kann dort zur Korrektur des Dopplerradarsignals verwendet werden.

Optional können mehrere Module 8 mit Leistungsstufe 3', Messwiderstand 4', NF-Übertrager 5' und Piezobauteil 6' verwendet werden, d. h. die Dopplerradareinrichtung ist mit mehreren, insbesondere winklig zueinander angeordneten Strahlungsfenstern ausgestattet. In diesem Fall ergeben sich wiederum zwei Möglichkeiten zur Einschätzung des Zustandes des Gesamtsystems und seiner Teile. Zum einen liefern die zeitlich veränderlichen Ansteuerströme bzw. Ansteuerspannungen der als unbestromte Sensoren wirkenden Piezobauteile 6 und 6' im Vergleich mit Schwellwerten relativ zueinander auswertbare Informationen über die Strahlungsfenster und ihre unmittelbare Umgebung. Zum anderen können bei wechselseitiger Nutzung der Piezobauteile 6 und 6' als passiver Sensor und als aktiver Aktuator die empfängerseitig abgegriffenen Spannungssignale zur Einschätzung des gesamten Zustandes der Dopplerradareinrichtung verarbeitet werden. Das betrifft beispielsweise Gehäuserisse, Verschmutzung, Aufhängungsmängel, Anschlagen loser Teile in der Umgebung und Wassereinbruch in das normalerweise hermetisch abgedichtete Gehäuse.

## Patentansprüche

1. Dopplerradareinrichtung mit einem Mikrokontrollersystem (1) und mindestens einem Strahlungsfenster, insbesondere Mikrowellenfenster, zur Ermittlung einer Geschwindigkeit und/oder eines Weges eines Schienenfahrzeugs über Grund,
**dadurch gekennzeichnet,**
**dass** das Strahlungsfenster mit mindestens einem über Elektroden elektrisch ansteuerbaren Piezobauteil (6, 6') in mechanischem Kontakt steht, wobei das Piezobauteil (6, 6') sowohl als bestromter Aktuator zur Erzeugung einer Resonanzschwingung als auch als unbestromter Sensor zur Messung von Körperschallschwingungem betreibbar ist, wobei über eine Schaltung zur Spannungsbegrenzung (7) die gemessenen Körperschallschwingungen dem Mikrokontrollersystem (1) zugeführt und dort zur Korrektur des Dopplerradarsignals verwendet werden.

2. Dopplerradareinrichtung nach Anspruch 1,
**dadurch gekennzeichnet,**
**dass** das Piezobauteil (6, 6') wasserbeständig an den Rändern des Strahlungsfensters befestigt ist.

3. Dopplerradareinrichtung nach einem der vorangehenden Ansprüche,
**dadurch gekennzeichnet,**
**dass** die Schwingungsenergie der Piezobauteile (6, 6') über ein kompressibles oder elastisches Medium auf das Strahlungsfenster übertragbar ist.

4. Dopplerradareinrichtung nach einem der vorangehenden Ansprüche,
**dadurch gekennzeichnet,**
**dass** das als Aktuator betriebene Piezobauteil (6, 6') über eine Leistungsstufe (3, 3') mit Wechselspannung beaufschlagt ist.

5. Dopplerradareinrichtung nach Anspruch 4,
**dadurch gekennzeichnet,**
**dass** der Leistungsstufe (3, 3') ein Messwiderstand (4, 4') und ein NF-Übertrager (5, 5') nachgeschaltet sind.

6. Dopplerradareinrichtung nach Anspruch 5,
**dadurch gekennzeichnet,**
**dass** die Ansteuerung der Leistungsstufe (3, 3') und/oder die Auswertung des Ausgangssignals des Messwiderstandes (4, 4') mittels des Mikrokontrollersystems (1) erfolgt.

7. Dopplerradareinrichtung nach einem der vorangehenden Ansprüche,
**dadurch gekennzeichnet,**
**dass** die Spannung zwischen den Elektroden des Piezobauteiles (6, 6') über eine Spannungsanpassung zur Auswertung an einen Analogeingang des Mikrokontrollersystems (1) geführt ist.

8. Dopplerradareinrichtung nach Anspruch 7,
**dadurch gekennzeichnet,**
**dass** das Mikrokontrollersystem (1) erste Mittel aufweist, welche auf der Grundlage zugeführter Messsignale die zur Piezoansteuerung generierte Wechselspannung in ihrer Frequenz der mechanischen Resonanz des Systems anpassen.

9. Dopplerradareinrichtung nach einem der Ansprüche 7 oder 8,
**dadurch gekennzeichnet,**
**dass** das Mikrokontrollersystem (1) zweite Mittel aufweist, welche auf der Grundlage zugeführter Messsignale den Verschmutzungs- bzw. Vereisungsgrad des Strahlungsfensters abschätzen.

10. Dopplerradareinrichtung nach einem der Ansprüche 7 bis 9,
**dadurch gekennzeichnet,**
**dass** das Mikrokontrollersystem (1) dritte Mittel aufweist, welche auf der Grundlage zugeführter Messsignale bezüglich bewegungsabhängiger Vibrationen den Fahrzustand des Fahrzeuges abschätzen und an einer Dopplerradarauswerteinrichtung oder ein übergeordnetes Rechnersystem weiterleiten.

11. Dopplerradareinrichtung nach einem der Ansprüche 7 bis 10,
**dadurch gekennzeichnet,**
**dass** das Mikrokontrollersystem (1) vierte Mittel aufweist, welche auf der Grundlage zugeführter Messsignale Beschädigungen oder Montagefehler der Dopplerradareinrichtung bezüglich Gehäuserisse, Verschmutzung, Aufhängungsmängel, Anschlagen loser Teile und Wassereinbruch feststellen.

12. Dopplerradareinrichtung nach einem der vorangehenden Ansprüche,
**dadurch gekennzeichnet,**
**dass** die Aktivierungshäufigkeit des Piezobauteils (6, 6') als bestromter Aktuator zur Erzeugung einer Resonanzschwingung vom detektierten Verschmutzungs- und Vereisungsgrad abhängig ist.

## Claims

1. Doppler radar device having a microcontroller system (1) and at least one radiation window, in particular a microwave window, for determination of a speed and/or a path of a rail vehicle over the ground,
**characterized in that**
the radiation window makes mechanical contact with at least one piezo-component (6, 6'), which can be driven electrically via electrodes, wherein the piezo-component (6, 6') can be operated both as an actuator through which current passes in order to produce a resonant oscillation and as a sensor with no current passing through it in order to measure structure-borne sound oscillations, wherein the measured structure-borne sound oscillations are supplied to the microcontroller system (1) via a circuit for voltage limiting (7), and are used there in order to correct the Doppler radar signal.

2. Doppler radar device according to Claim 1,
**characterized in that**
the piezo-component (6, 6') is attached in a water-resistant manner to the edges of the radiation window.

3. Doppler radar device according to one of the preceding claims,
**characterized in that**
the oscillation energy of the piezo-components (6, 6') can be transmitted to the radiation window via a compressible or elastic medium.

4. Doppler radar device according to one of the preceding claims,
**characterized in that**
the piezo-component (6, 6'), which is operated as an actuator, has AC voltage applied to it via a power stage (3, 3').

5. Doppler radar device according to Claim 4,
**characterized in that**
the power stage (3, 3') is followed by a measurement resistor (4, 4') and an LF transmitter (5, 5').

6. Doppler radar device according to Claim 5,
**characterized in that**
the power stage (3, 3') is driven and/or the output signal of the measurement resistor (4, 4') is evaluated by means of the microcontroller system (1).

7. Doppler radar device according to one of the preceding claims,
**characterized in that**
the voltage is passed between the electrodes of the piezo-component (6, 6') via voltage matching for evaluation to an analogue input of the microcontroller system (1).

8. Doppler radar device according to Claim 7,
**characterized in that**
the microcontroller system (1) has first means which, on the basis of supplied measurement signals, match the frequency of the AC voltage which is generated for the piezo-drive to the mechanical resonance of the system.

9. Doppler radar device according to one of Claims 7 or 8,
**characterized in that**
the microcontroller system (1) has second means which estimate the degree of dirt or icing of the radiation window on the basis of supplied measurement signals.

10. Doppler radar device according to one of Claims 7 to 9,
**characterized in that**
the microcontroller system (1) has third means, which estimate the state of motion of the vehicle on the basis of supplied measurement signals relating to movement-dependent vibration, and pass it to a Doppler radar evaluation device or to a superordinate computer system.

11. Doppler radar device according to one of Claims 7 to 10,
**characterized in that**
the microcontroller system (1) has fourth means, which detect damage or installation errors of the Doppler radar device with respect to housing tears, dirt, suspension defects, striking of loose parts and water ingress, on the basis of supplied measurement signals.

12. Doppler radar device according to one of the preceding claims,
**characterized in that**
the activation frequency of the piezo-component (6, 6'), as an actuator through which current is passed in order to produce a resonant oscillation, is dependent on the detected degree of dirt and icing.

## Revendications

1. Dispositif de radar Doppler comprenant un système microcontrôleur ( 1 ) et au moins une fenêtre de rayonnement, notamment une fenêtre de micro-ondes, pour la détermination d'une vitesse et/ou d'un trajet d'un véhicule ferroviaire au-dessus du niveau du sol,
**caractérisé par le fait que** la fenêtre de rayonnement est en contact mécanique avec au moins un composant piézoélectrique ( 6, 6' ) à commande électrique, le composant piézoélectrique ( 6, 6' ) pouvant fonctionner aussi bien comme actionneur alimenté en courant pour la production d'une oscillation de résonance que comme capteur non alimenté en courant pour la mesure d'oscillations de bruit de structure, les oscillations de bruit de structure mesurées étant envoyées par l'intermédiaire d'un circuit destiné à la limitation de tension ( 7 ) au système microcontrôleur ( 1 ) et y étant utilisées pour la correction du signal de radar Doppler.

2. Dispositif de radar Doppler selon la revendication 1, **caractérisé par le fait que** le composant piézoélectrique ( 6, 6' ) est fixé, de manière à résister à l'eau, aux bords de la fenêtre de rayonnement.

3. Dispositif de radar Doppler selon l'une des revendications précédentes, **caractérisé par le fait que** l'énergie d'oscillation des composants piézoélectriques ( 6, 6' ) est transmissible à la fenêtre de rayonnement par l'intermédiaire d'un milieu compressible ou élastique.

4. Dispositif de radar Doppler selon l'une des revendications précédentes, **caractérisé par le fait que** le composant piézoélectrique ( 6, 6' ) fonctionnant comme actionneur est alimenté en tension alternative par l'intermédiaire d'un étage de puissance ( 3, 3' ).

5. Dispositif de radar Doppler selon la revendication 4, **caractérisé par le fait qu'**une résistance série ( 4, 4' ) et un transformateur à basse fréquence ( 5, 5' ) sont branchés en aval de l'étage de puissance ( 3, 3' ).

6. Dispositif de radar Doppler selon la revendication 5, **caractérisé par le fait que** la commande de l'étage de puissance ( 3, 3' ) et/ou l'évaluation du signal de sortie de la résistance série ( 4, 4' ) s'effectuent au moyen du système microcontrôleur ( 1 ).

7. Dispositif de radar Doppler selon l'une des revendications précédentes, **caractérisé par le fait que** la tension entre les électrodes du composant piézoélectrique ( 6, 6' ) est amenée, par l'intermédiaire d'une d'adaptation de tension, en vue d'une exploitation à une entrée analogique du système microcontrôleur ( 1 ).

8. Dispositif de radar Doppler selon la revendication 7, **caractérisé par le fait que** le système microcontrôleur ( 1 ) comporte des premiers moyens qui, sur la base de signaux mesurés envoyés, adaptent la fréquence de la tension alternative produite pour la commande piézoélectrique à la résonance mécanique du système.

9. Dispositif de radar Doppler selon l'une des revendications 7 ou 8, **caractérisé par le fait que** le système microcontrôleur ( 1 ) comporte des deuxièmes moyens qui, sur la base de signaux mesurés envoyés, estiment le degré de salissure ou de givrage de la fenêtre de rayonnement.

10. Dispositif de radar Doppler selon l'une des revendications 7 à 9, **caractérisé par le fait que** le système microcontrôleur ( 1 ) comporte des troisièmes moyens qui, sur la base de signaux mesurés envoyés, estiment l'état de marche du véhicule par rapport à des vibrations dépendantes du mouvement et le transmettent à un dispositif d'exploitation de radar Doppler ou à un système informatique de rang supérieur.

11. Dispositif de radar Doppler selon l'une des revendications 7 à 10, **caractérisé par le fait que** le système microcontrôleur ( 1 ) comporte des quatrièmes moyens qui, sur la base de signaux mesurés envoyés, constatent des dommages ou des erreurs de montage du dispositif de radar Doppler concernant des fissures dans l'habillage, des salissures, un accrochage déficient, des heurts de pièces mobiles et une pénétration d'eau.

12. Dispositif de radar Doppler selon l'une des revendications précédentes, **caractérisé par le fait que** la fréquence d'activation du composant piézoélectrique ( 6, 6' ) en tant qu'actionneur alimenté en courant pour la production d'une oscillation de résonance dépend du degré de salissure et de givrage détecté.
